**Europäisches Patentamt**

**European Patent Office**

**Office européen des brevets**

(19)

(11) Veröffentlichungsnummer : **0 259 325
B1**

(12) **EUROPÄISCHE PATENTSCHRIFT**

(45) Veröffentlichungstag der Patentschrift :
**03.01.90**

(21) Anmeldenummer : **86903211.0**

(22) Anmeldetag : **13.05.86**

(86) Internationale Anmeldenummer :
**PCT/DE 86/00205**

(87) Internationale Veröffentlichungsnummer :
**WO/8606597 (20.11.86 Gazette 86/25)**

(51) Int. Cl.⁵ : **A 47 C    3/02, A 47 C   17/84,
A 47 D    9/02, F 16 F    1/00**

(54) **PENDEL.**

(30) Priorität : **14.05.85 DE 8514525 U**

(43) Veröffenlichungstag der Anmeldung :
**16.03.88 Patentblatt 88/11**

(45) Bekanntmachung des Hinweises auf die Patenter-
teilung : **03.01.90 Patentblatt 90/01**

(84) Benannte Vertragsstaaten :
**AT BE CH DE FR GB IT LI LU**

(56) Entgegenhaltungen :
**FR–A– 1 576 409**

(73) Patentinhaber : **Haider, Eduard
Dechantsees 23
D-8591 Pullenreuth (DE)**

(72) Erfinder : **Haider, Eduard
Dechantsees 23
D-8591 Pullenreuth (DE)**

(74) Vertreter : **Voigt, Günter, Dipl.-Ing.
Patentanwälte Dr.-Ing. Alfred Schulze, Dipl.-Ing. Gün-
ter Voigt & Partner Nordring 152, Postfach 210104
D-8500 Nürnberg 21 (DE)**

**Beschreibung**

Die Neuerung bezieht sich auf ein mathematisches Pendel, das insbesondere bei der pendelnden Aufhängung von Sitz- oder Ruhemöbeln Anwendung findet.

Es hat bereits viele Versuche gegeben, die bisher weitverbreiteten statischen Sitz- und Ruhemöbel durch dynamische zu ersetzen.

So sind bereits seit langer Zeit Schaukelstühle bekannt, die anders als die üblichen Stühle eine dynamische Komponente aufweisen. Ganz Entsprechendes gilt auch für die ebenfalls seit langem bekannten Kinderwiegen, die wegen ihres dynamischen Charakters von den Kindern gern angenommen werden und sich als schlaffördernd erwiesen haben.

In jüngerer Zeit ist das Wasserbett als moderne Art eines dynamischen Bettes auf dem Markt erschienen. Das Wasserbett hat jedoch erhebliche Nachteile, indem es relativ viel Platz erfordert, träge auf Bewegungen reagiert, sehr schwer und recht teuer ist sowie bei einem etwaigen Auslaufen des Wassers nicht unerhebliche Schäden verursacht. Darüber hinaus bietet das Wasserbett keine kontinuierlichen Auf- und Abbewegungen und kann auch keine stets gleichbleibend horizontale Liegefläche gewährleisten. Um den mit einem Wasserbett verbundenen Problemen wenigstens einigermaßen Herr zu werden, erhalten die Wasserbetten neuerdings einen Sicherheitsrahmen und eine Sicherheitsschale. Eine Heizung mit Thermostat sorgt dafür, daß das Wasser automatisch stets richtig temperiert ist. Außerdem wird eine Abdeckung empfohlen, die zwischen Wasserbett und Laken angeordnet wird. Insgesamt erfordert die Verwendung eines Wasserbettes einen erheblichen zusätzlichen Aufwand und ist dennoch nicht unproblematisch.

Aus der DE-PS 1 124 648 ist eine Sitz- und Liegeschaukel bekannt, die recht viel Raum erfordert und wegen ihrer Aufbauten in einem Schlafzimmer optisch stören würde.

Aus der DE-PS 242 273 ist ferner eine Sitzgelegenheit bekannt, die auf Pendelstützen gelagert ist und sich in einem labilen Gleichgewicht befindet, aus dem sie bei Belastung mehr oder weniger ausgelenkt wird.

Aus dem DE-GM 1 708 191 ist eine an einem Schaukelgestell aufgehängte Sitzgelegenheit bekannt, die im Bedarfsfall auch arretiert werden kann. Ein solches Schaukelgestell ist ebenso wie die Einrichtung gemäß der weiter oben erwähnten DE-PS 1 124 648 für die Aufstellung in einem Schlaf- oder Wohnzimmer nicht geeignet.

Ähnliches gilt auch für eine Vielzahl vorbekannter Schaukelbetten, die mit großvolumigen Gestellen versehen sind oder aber an der Decke des Raumes aufgehängt werden müssen.

Aus der GB-PS 696 239 ist schließlich ein Schaukelstuhl bekannt, der über Gelenkpendel im gewissen Umfang nach vorn und rückwärts verschoben werden kann. Wegen der in den Gelenkpunkten auftretenden Reibung erfordert seine Verstellung jedoch nicht zu vernachlässigende Kräfte, ein etwaiges Nachschwingen ist ausgeschlossen.

Dem gegenüber bringt der im DE-GM 82 22 691 beschriebene Gegenstand, bei dem das Oberteil des Sitz- oder Ruhemöbels über Seilpendel am Unterteil aufgehängt ist, erhebliche Vorteile. Um ungewollt große Ausschläge und damit möglicherweise ein ruckhaftes Anstoßen während der Schwingbewegungen zu verhindern, sind bei diesem Sitz- oder Ruhemöbel sogenannte Gegenpendel vorgesehen, die die Schwingungsamplitude auf einen bestimmten Wert begrenzen und die Schwingungsamplitude bei Überschreiten gewisser Schwellenwerte ruckfrei, aber dennoch sicher limitieren.

Der Neuerung liegt die Aufgabe zugrunde, ein für ein solches Sitz- oder Ruhemöbel geeignetes Pendel zu schaffen, das sowohl in seinem Aufbau als auch in seiner Anwendung besonders einfach ist.

Die Lösung dieser Aufgabe erfolgt neuerungsgemäß durch die im kennzeichnenden Teil des Anspruchs 1 angegebenen Maßnahmen.

Vorteilhafte Weiterbildungen ergeben sich aus den Unteransprüchen.

Diese Lösung hat den erheblichen Vorteil, daß neben dem geringen Raumbedarf und dem relativ geringen Preis bei geringsten Körperbewegungen des Ruhenden oder Schlafenden zwar ein Höchstmaß an Eigendynamik geboten wird, gleichzeitig aber ein Verfangen der Pendel und eine Schlingenbildung beim Transport mit Sicherheit ausgeschlossen ist.

Wird das Pendel darüber hinaus mit einem elastisch verformbaren Material umgeben, so übernimmt es gleichzeitig auch die Funktion des sogenannten « Gegenpendels » gemäß dem Stand der Technik. Es ergibt sich so ein optimales Schwingungs-Dämpfungs-Verhalten.

Die Neuerung wird nachfolgend unter Bezugnahme auf die Zeichnungsfiguren beispielsweise erläutert. Es zeigen :

Fig. 1 ein Pendel mit im wesentlichen kugelförmigen Einspannköpfen,

Fig. 2 ein Pendel mit im wesentlichen kugelkalottenförmigen Einspannköpfen, wobei deren ebene Kreisflächen dem eigentlichen Pendel abgewandt sind,

Fig. 3 eine erste Einspannung eines Pendels mit kugelkalottenförmigen Einspannköpfen und

Fig. 4 eine weitere Möglichkeit für die Einspannung eines Pendels mit kugelkalottenförmigen Einspannköpfen.

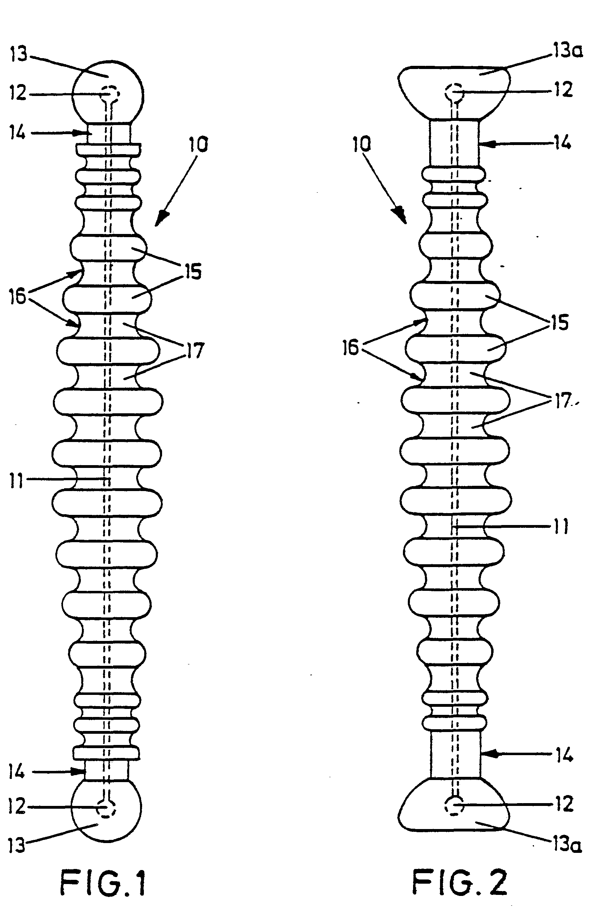

Das in Fig. 1 dargestellte mathematische Pendel 10 weist in seinem Inneren eine Seele 11 aus Draht, Drahtlitze, Naturfaser oder Kunststoffaser auf, wobei die beiden letzteren bei Bedarf auch aus einer Vielzahl von Einzelfasern verdrillt oder verseilt sein können.

An den beiden Enden des Pendels 10 können Erweiterungen 12 der Seele 11 vorhanden sein, um die herum dann der sogenannte Einspannkopf 13 angeordnet wird.

Über die Länge des Pendels 10 ist in Reihe eine Vielzahl relativ starrer wulstartiger Körper 15 angeordnet, die mit nur geringem Abstand voneinander perlenähnlich über fast die gesamte Länge des Pendels angeordnet sind. Durch diese Körper 15 mit nur geringem Abstand voneinander werden Schlingenbildungen des Pendels während des Transports oder bei ähnlichen Einwirkungen mit Sicherheit vermieden. Der Durchmesser der perlenähnlich angeordneten, relativ starren Körper 15 kann sich von den Endbereichen des Pendels 10 zur Mitte hin vergrößern. In der Nähe der Einspannköpfe 13, 13a bleibt eine relativ kurze Zone 14 frei von diesen relativ starren Körpern 15, um eine ungestörte Aufhängung an den Einspannköpfen und damit eine einwandfreie Funktion des Pendels sicherzustellen. Die Zwischenräume 16 zwischen den einzelnen perlenähnlich angeordneten relativ starren Körpern 15 können weitgehend mit einem elastischen Material aufgefüllt werden, das ggfs. auch die erwähnten Körper 15 gleichzeitig mit umgibt. Durch die Stärke der aufgetragenen elastischen Umhüllung 17 kann das Verhalten des Pendels 10 beeinflußt werden. Eine Verstärkung dieser Schicht erhöht die Dämpfungseigenschaften. Auf diese Weise können die Funktion des im Stand der Technik beschriebenen Pendels und des Gegenpendels in einem einzigen Element realisiert werden. Durch eine Vielzahl von Abstufungen kann ein den jeweiligen Bedürfnissen recht exakt entsprechendes Pendel 10 geschaffen werden, das dann nur noch ausgewählt und eingehängt werden muß. Dabei können die Einspannköpfe 13, 13a über einen seitlichen Schlitz 19 in einer entsprechenden Aufnahmevorrichtung 18 in ihrer Funktionslage positioniert werden. Zusätzliche Montagemittel sind grundsätzlich nicht erforderlich. Bei Fahrzeugsitzen können besondere Sicherheitsmaßnahmen vorgesehen werden.

Das in Fig. 2 dargestellte Pendel ist grundsätzlich gleich aufgebaut, entsprechende Teile haben in den Fig. 1 bzw. 2 gleiche Bezugszahlen. Anstelle des im wesentlichen kugelförmigen Einspannkopfes 13 gemäß Fig. 1 hat das Pendel 10 in Fig. 2 jedoch Einspannköpfe 13 a, die im wesentlichen Kugelkalottenform aufweisen, wobei die ebene Kreisfläche der Kugelkalotte dem eigentlichen Pendel 10 abgewandt ist. Ganz entsprechend dem Pendel gemäß Fig. 1 können auch bei diesem Pendel die Zwischenräume 16 zwischen den im wesentlichen starren Körpern 15 mit einem elastischen Material 17 aufgefüllt sein.

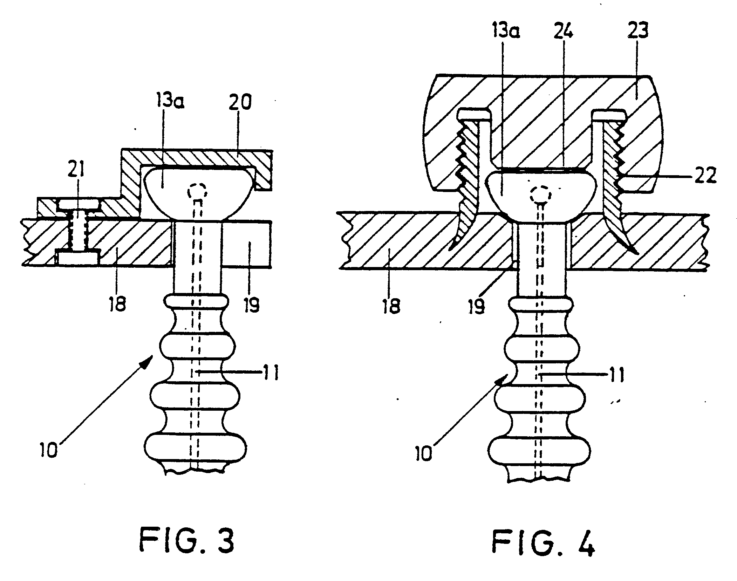

Fig. 3 zeigt eine für den Einspannkopf 13 a günstige Fixierung. Zu diesem Zweck wird das Pendel 10 mit dem Einspannkopf 13 a in eine Aufnahmevorrichtung 18 eingesetzt, die mit einem seitlichen Schlitz 19 versehen ist, so daß das Pendel 10 von der Seite her in diesen Schlitz 19 eingeführt werden kann. In der endgültigen Positionierung wird der Einspannkopf 13a dann von einer Haltelasche 20 abgedeckt, die mit einer Verschraubung 21 mit der Aufnahmevorrichtung 18 verbunden ist.

Entsprechendes läßt sich auch erreichen, wenn die mit einem Schlitz 19 versehene Aufnahmevorrichtung 18 gemäß Fig. 4 auf der dem eigentlichen Pendel 10 abgewandten Seite mit einem Gewindeschaft 22 versehen ist, der in der Flucht des Schlitzes 19 ebenfalls geschlitzt ist. In diesem Fall wird der Einspannkopf 13 a des Pendels 10 über die Höhe des Gewindeschafts 22 hinausgehoben und dann innerhalb des Gewindeschaftes 22 positioniert. Anschließend wird dann eine Hutmutter 23 auf den Gewindeschaft aufgesetzt und verschraubt. Ein Vorsprung 24 innerhalb der Hutmutter 23 kann dabei für einen festen Andruck des Einspannkopfes 13 a an die Aufnahmevorrichtung 18 sorgen. Selbstverständlich könnte anstelle des in Fig. 4 dargestellten Gewindeschaftes 22 mit Außengewinde auch ein solcher mit Innengewinde vorgesehen werden, wobei dann der Vorsprung 24 als Gewindestift ausgebildet werden könnte.

Im übrigen gelten für das oben beschriebene Pendel die im DE-GM 8 222 691 beschriebenen Zusammenhänge.

Eine zusätzliche Dämpfung zwischen den gegeneinander pendelnden Teilen kann beispielsweise in besonderer Ausgestaltung für einen Autositz dadurch erreicht werden, daß die relativ zueinander beweglichen Teile über elastische Matten miteinander verspannt werden. Auch kann für den Fall eines denkbaren Unfalls, bei dem eine zumindest kurzzeitige Überdehnung des Pendels 10 eintreten kann, eine elastisch federnde Auffangpfanne für die Haltelaschen 20 — oben und unten — vorgesehen werden.

**Patentansprüche**

1. Pendel, dadurch gekennzeichnet, daß die beiden Enden mit jeweils einem Einspannkopf (13, 13a) versehen sind und mit Ausnahme einer kurzen Zone (14) in den Endbereichen des Pendels (10) über dessen Länge verteilt eine Vielzahl von wulstartigen, relativ starren Körpern (15) mit nur geringem gegenseitigen Abstand voneinander perlenähnlich angeordnet ist.

2. Pendel nach Anspruch 1, dadurch gekennzeichnet, daß die Seele (11) des Pendels (10) als einadriger Draht ausgebildet ist.

3. Pendel nach Anspruch 1, dadurch gekennzeichnet, daß die Seele (11) des Pendels (10) als Drahtlitze ausgebildet ist.

4. Pendel nach Anspruch 1, dadurch gekennzeichnet, daß die Seele (11) des Pendels (10) aus Naturfasern besteht.

5. Pendel nach Anspruch 1, dadurch gekennzeichnet, daß die Seele (11) des Pendels (10) aus verseilten Naturfasern besteht.

6. Pendel nach einem der Ansprüche 1 bis 5, dadurch gekennzeichnet, daß die Einspannköpfe (13) im wesentlichen die Gestalt einer Kugel haben.

7. Pendel nach einem der Ansprüche 1 bis 5, dadurch gekennzeichnet, daß die Einspannköpfe (13a) im wesentlichen die Gestalt einer Kugelkalotte haben, wobei deren ebene Kreisfläche dem eigentlichen Pendel (10) abgewandt ist.

8. Pendel nach Anspruch 6 oder 7, dadurch gekennzeichnet, daß die Seele (11) des Pendels (10) im Bereich der Einspannköpfe (13, 13a) verstärkt ist.

9. Pendel nach einem der Ansprüche 1 bis 8, dadurch gekennzeichnet, daß sich die Durchmesser der perlenähnlich aufgereihten wulstartigen, relativ starren Körper (15) von den Einspannbereichen des Pendels (10) zur Mitte hin vergrößern.

10. Pendel nach einem der Ansprüche 1 bis 9, dadurch gekennzeichnet, daß die Seele (11) des Pendels in den Zwischenräumen (16) zwischen den perlenähnlich angeordneten wulstartigen Körpern (15) mit einem elastischen Überzug (17) umgeben ist.

11. Pendel nach einem der Ansprüche 1 bis 9, dadurch gekennzeichnet, daß sowohl die perlenähnlich angeordneten wulstartigen Körper (15) als auch die Seele (11) des Pendels (10) in den Zwischenräumen (16) zwischen diesen Körpern (15) insgesamt mit einem elastischen Überzug (17) umgeben sind.

12. Pendel nach Anspruch 1, dadurch gekennzeichnet, daß es insgesamt als ein Teil aus gleichem Material, insbesondere Desmopan, ausgebildet ist.

## Claims

1. Pendulum, characterized in that each of the two ends is provided with a clamping head (13, 13a) and, with the exception of a short zone (14) in the end regions of the pendulum (10), a multiplicity of toroidal, relatively rigid bodies (15) in arranged distributed over the length of said pendulum, pearl-fashion, with only a small mutual spacing.

2. Pendulum according to Claim 1, characterized in that the core (11) of the pendulum (10) is designed as a single-wire wire.

3. Pendulum according to Claim 1, characterized in that the core (11) of the pendulum (10) is designed as a stranded wire.

4. Pendulum according to Claim 1, characterized in that the core (11) of the pendulum (10) consists of natural fibres.

5. Pendulum according to Claim 1, characterized in that the core (11) of the pendulum (10) consists of stranded natural fibres.

6. Pendulum according to one of Claims 1 to 5, characterized in that the clamping heads (13) essentially have the form of a sphere.

7. Pendulum according to one of Claims 1 to 5, characterized in that the clamping heads (13a) essentially have the form of a spherical segment, the plane circular face of the segment facing away from the actual pendulum (10).

8. Pendulum according to Claim 6 or 7, characterized in that the core (11) of the pendulum (10) is reinforced in the region of the clamping heads (13, 13a).

9. Pendulum according to one of Claims 1 to 8, characterized in that the diameters of the toroidal, relatively rigid bodies (15) threaded on pearl-fashion increase from the clamping regions of the pendulum (10) towards the centre.

10. Pendulum according to one of Claims 1 to 9, characterized in that, in the interspaces (16) between the toroidal bodies (15) arranged pearl-fashion, the core (11) of the pendulum is surrounded by a resilient covering (17).

11. Pendulum according to one of Claims 1 to 9, characterized in that both the toroidal bodies (15) arranged pearl-fashion and the core (11) of the pendulum (10) in the interspaces (16) between these bodies (15) are surrounded overall by a resilient covering (17).

12. Pendulum according to Claim 1, characterized in that it is designed overall as one part from the same material, in particular Desmopan.

## Revendications

1. Pendule caractérisé en ce que ses deux extrémités sont pourvues d'une tête de fixation (13, 13a) et en ce qu'une multitude de corps relativement rigides (15) en forme de bourrelet sont disposés à une courte distance l'un de l'autre, comme un chapelet, sur toute la longueur du pendule (10), à l'exception d'une courte zone (14) située prés de chacune des extrémités du pendule.

2. Pendule selon la revendication 1 caractérisé en ce que l'âme (11) du pendule (10) est un fil de fer simple.

3. Pendule selon la revendication 1 caractérisé en ce que l'âme (11) du pendule (10) est un fil de fer torsadé.

4. Pendule selon la revendication 1 caractérisé en ce que l'âme (11) du pendule (10) est en fibres naturelles.

5. Pendule selon la revendication 1 caractérisé en ce que l'âme du pendule est en fibres naturelles toronnées.

6. Pendule selon l'une des revendications 1 à 5 caractérisé en ce que les têtes de fixation (13) présentent sensiblement la forme d'une sphère.

7. Pendule selon l'une des revendications 1 à 5 caractérisé en ce que les têtes de fixation (13a) présentent sensiblement la forme d'une calotte sphérique dont la surface circulaire plane est opposée au pendule (10) proprement dit.

8. Pendule selon l'une des revendications 6 ou 7 caractérisé en ce que l'âme (11) du pendule (10) est renforcée dans la zone des têtes de fixation (13, 13a).

9. Pendule selon l'une des revendications 1 à 8 caractérisé en ce que le diamètre des corps (15) relativement rigides en forme de bourrelets, disposés en chapelet, s'agrandit progressivement à partir des zones de fixation du pendule (10) vers son milieu.

10. Pendule selon l'une des revendications 1 à 9 caractérisé en ce que l'espace entre les corps (15) disposés en chapelet sur l'âme (11), est recouvert d'un habillage (17) en matière élastique.

11. Pendule selon l'une des revendications 1 à 9 caractérisé en ce que tant les corps (15) disposés en chapelet sur l'âme (11) que les espaces séparant lesdits corps sont totalement recouverts d'un habillage (17) en matière élastique.

12. Pendule selon la revendication 1 caractérisé en ce que il est constitué d'une seule pièce d'une matière unique, plus particulièrement de Desmopan.

FIG.1

FIG.2

1

FIG. 3

FIG. 4